# EUROPÄISCHE PATENTSCHRIFT

(11) **EP 3 956 108 B1**
(45) Veröffentlichungstag und Bekanntmachung des Hinweises auf die Patenterteilung: **22.04.2026**
(21) Anmeldenummer: 20719346.7
(22) Anmeldetag: 02.04.2020
(51) Int. Cl.: B25J 5/00, B25J 19/02, B67C 3/22

(54) **ROBOTERSYSTEM FÜR EINE BEHÄLTERVERARBEITUNGSANLAGE**
ROBOT SYSTEM FOR A CONTAINER TREATMENT PLANT
SYSTÈME DE ROBOT POUR UNE INSTALLATION DE TRAITEMENT DE RÉCIPIENT

(30) Priorität: 18.04.2019 DE 202019102226 U
(43) Veröffentlichungstag der Anmeldung: 23.02.2022
(73) Patentinhaber: Krones AG, 93073 Neutraubling (DE)
(72) Erfinder: HACK, Andreas, 93073 Neutraubling (DE); PEUTL, August, 93073 Neutraubling (DE); WESS, Bernhard, 93073 Neutraubling (DE); RAITH, Tobias, 93073 Neutraubling (DE); WAGNER, Martin, 93073 Neutraubling (DE)
(74) Vertreter: Grünecker Patent- und Rechtsanwälte PartG mbB
(86) Internationale Anmeldenummer: PCT/EP2020/059383
(87) Internationale Veröffentlichungsnummer: WO 2020/212152

(56) Entgegenhaltungen:
- WO-A2-2010/043640
- DE-A1- 102010 045 268
- DE-A1- 102011 054 890
- DE-A1- 102017 209 838

## Beschreibung

Die Erfindung betrifft ein Robotersystem für eine Behälterverarbeitungsanlage mit den Merkmalen des Oberbegriffs von Anspruch 1.

Derartige Behälterverarbeitungsanlagen umfassen üblicherweise eine oder mehrere Behälterbehandlungsmaschinen, wie beispielsweise eine Behälterherstellungsmaschine, einen Füller, einen Verschließer, eine Etikettiermaschine, eine Inspektionsvorrichtung, eine Verpackungsmaschine und/oder einen Palettierter, um ein fließfähiges Produkt in Behälter abzufüllen, zu verschließen und zu Gebinden zusammenzustellen. Beispielsweise kann es sich bei dem fließfähigen Produkt kann um ein Getränk handeln.

In Behälterverarbeitungsanlagen fallen üblicherweise Arbeitsaufträge mit Rüst- und/oder Garniturteilen oder auch das Nachfüllen von Verbrauchsmaterialien an, die fast ausschließlich von einem Bediener erledigt werden. Beispielsweise werden bei der Reinigung des Füllers so genannte CIP-Kappen (CIP = Clean in Place) aufgesetzt, um damit die Füllorgane ohne Ausbau zu spülen.

Nachteilig dabei ist, dass die manuelle Durchführung der Arbeitsaufträge einen hohen Zeitaufwand erfordert, der mit einem entsprechenden Kostenaufwand verbunden ist.

Zur Automatisierung offenbart die EP 0 985 633 A1 ein Verfahren und eine Vorrichtung zum automatischen Wechseln von Füllköpfen eine Abfüllmaschine mit einem in unterschiedlichen Positionen verfahrbaren Bestückung-und Wechselautomaten, mit welchem Bauteile an den Behandlungskosten angebracht, vorhandene Bauteile von diesen entfernt und in eine Vorratsposition verbringt war und andere Bauteile aus ihrer Fords Position mit den Behandlungskosten verbindbar sind.

Nachteilig dabei ist, dass die bekannte Vorrichtung nur beim Rüsten der zugeordneten Behälterbehandlungsmaschinen aktiv ist und während des Abfüllens des Produkts stillsteht. Zudem ist die bekannte Vorrichtung nicht flexibel einsetzbar.

Die EP 1 132 334 B1 offenbart eine Magazinvorrichtung für an Behälterbehandlungsmaschinen anbringbare Bauteile.

Die WO 2013/060549 A1 offenbart eine Behälterbehandlungsanlage und Handhabungsvorrichtung.

Die DE 10 2009 033 557 A1 offenbart eine Vorrichtung zum Abfüllen von Getränken mit CIP-Kappen-Steuerung.

Die DE 10 2011 054890 A1 offenbart ein Robotersystem gemäß dem Oberbegriff des Anspruchs 1.

Aufgabe der vorliegenden Erfindung ist es, eine Vorrichtung für eine Behälterverarbeitungsanlage zur Durchführung von Arbeitsaufträgen mit Rüst- und/oder Garniturteilen bereitzustellen, die besser ausgelastet und flexibler einsetzbar ist.

Zur Lösung dieser Aufgabenstellung stellt Erfindung ein Robotersystem für eine Behälterverarbeitungsanlage mit den Merkmalen des Anspruchs 1 bereit. Vorteilhafte Ausführungsformen der Erfindung sind in den Unteransprüchen genannt.

Dadurch, dass die Robotereinheit an dem mobilen Wagen angeordnet ist, der das bodengestütztes Fahrwerk zur Fortbewegung in dem Arbeitsbereich der Behälterverarbeitungsanlage umfasst, kann sie manuell oder automatisch zu derjenigen Behälterbehandlungsmaschine der Behälterverarbeitungsanlage verfahren werden, an der gerade ein Arbeitsauftrag mit den Rüst-und/oder Garniturteilen durchzuführen ist. Anschließend kann sie zu einer anderen Behälterbehandlungsmaschine verfahren werden, an der ein weiterer Arbeitsauftrag mit Rüst- und/oder Garniturteilen durchzuführen ist. Folglich ist die Robotereinheit aufgrund ihrer Anordnung am mobilen Wagen besonders flexibel einsetzbar und kann besser ausgelastet werden. Dadurch, dass das Robotersystem die Andockstation zum Andocken des mobilen Wagens an der Behälterbehandlungsmaschine umfasst, kann es mit dem mobilen Wagen sicher an einer definierten Zielposition angedockt werden. Folglich ist der mobile Wagen bei der Durchführung der Arbeitsaufträge gegen ein Verschieben durch von der Robotereinheit übertragene Kräfte gesichert.

Die Behälterverarbeitungsanlage kann mehrere Behälterbehandlungsmaschinen umfassen, die über einen oder mehrere Transporteure miteinander verbunden sind. Mit der Behälterbehandlungsmaschine kann eine Maschine zur Behandlung von Behältern und/oder zum Abfüllen eines Getränks gemeint sein. Die Behälterbehandlungsmaschine kann eine Behälterherstellungsmaschine, einen Rinser, eine Inspektionsvorrichtung, eine Etikettiermaschine, einen Füller zum Abfüllen eines Getränks in die Behälter, einen Verschließer, eine Verpackungsmaschine und/oder einen Palettierer umfassen. Falls in der Behälterverarbeitungsanlage mehrere Behälterbehandlungsmaschinen vorhanden sind, können jeweils einer Behälterbehandlungsmaschine eine Andockstation zugeordnet sein. Dadurch kann die Robotereinheit mit dem mobilen Wagen sicher an der jeweiligen Behälterbehandlungsmaschine positioniert werden.

Die Behälter können dazu vorgesehen sein, ein fließfähiges Produkt, wie ein Getränk, ein Lebensmittel, ein Pharmaprodukt, ein Medizinprodukt, ein Reinigungsmittel, ein Spray und/oder ein Körperpflegeprodukt aufzunehmen. Vorzugsweise kann mit dem Behälter ein Getränkebehälter gemeint sein. Mit einem Getränk kann Mineralwasser, ein Softdrink, ein Saft und/oder Bier gemeint sein. Mit einem Lebensmittel kann ein Produkt wie das Getränk, Essig, Speiseöl und/oder dergleichen gemeint sein. Vorzugsweise kann ein Behälter gemeint sein, mit dem ein flüssiges oder pastöses Produkt vom Hersteller zum Endverbraucher transportiert wird.

Die Behälter können dazu vorgesehen sein, das fließfähige Produkt darin abzufüllen und sie mit einem Verschluss zu versehen. Die Behälter können Kunststoffflaschen, Glasflaschen, Dosen und/oder Tuben sein. Bei Kunststoffflaschen kann es sich im speziellen um PET-, PEN-, HD-PE-oder PP-Flaschen handeln. Ebenso kann es sich um biologisch abbaubare Behälter handeln, deren Hauptbestandteile aus nachwachsenden Rohstoffen, wie zum Beispiel Zuckerrohr, Weizen oder Mais bestehen.

Der mobile Wagen kann einen Rahmen umfassen, an dem das bodengestützte Fahrwerk angeordnet ist. Der Rahmen kann wahlweise mit einer der Robotereinheiten verbindbar sein. Denkbar ist, dass der Rahmen gehäuseartig ausgebildet ist. Das bodengestützte Fahrwerk kann mehrere Räder umfassen, wobei wenigstens eines der Räder zum Lenken schwenkbar ausgebildet ist. Der mobile Wagen kann eine Griffstange umfassen, mit der der mobile Wagen und die daran angeordnete Robotereinheit durch eine Bedienperson im Arbeitsbereich der Behälterverarbeitungsanlage verfahrbar ist.

Die Robotereinheit kann einen Roboterarm mit wenigstens einem steuerbaren Gelenk und/oder einer Verfahreinheit zum Bewegen eines Effektors umfassen. Beispielsweise kann es sich bei der Robotereinheit um einen Knickarmroboter handeln. Der Effektor kann ein Werkzeug, wie beispielsweise einen Greifer oder Sauger umfassen, um einen Gegenstand wie beispielsweise ein oder mehrere Rüst- und/oder Garniturteile zu greifen. Vorzugsweise kann der Roboterarm bzw. die Verfahreinheit dazu ausgebildet sein, den Effektor dreidimensional im Raum zu bewegen. Denkbar ist jedoch auch eine zweidimensionale oder eindimensional Bewegung. Denkbar ist, dass die Robotereinheit und/oder der mobile Wagen eine wieder aufladbare Batterie zur Stromversorgung umfasst. Bei den Robotereinheit kann es sich auch um eine kollaborativ und/oder kooperativ arbeitende Robotereinheit handeln.

Die Andockstation kann Verbindungselemente umfassen, um den mobilen Wagen beim Andocken mit der Andockstation lösbar zu verbinden. Zusätzlich kann die Andockstation eine vorzugsweise horizontal verlaufende Plattform umfassen, die mit dem mobilen Wagen befahrbar ist. Denkbar ist, dass das bodengestützte Fahrwerk höhenverstellbare Räder umfasst, um einen Ausgleich für Bodenschrägen oder einen Höhenversatz zu schaffen. Die Andockstation kann stationär an der Behälterbehandlungsmaschine angeordnet sein.

Das Robotersystem kann eine Steuerungseinheit umfassen, um die Robotereinheit, den mobilen Wagen und/oder die Andockstation zu steuern. Die Steuerungseinheit kann als Computersystem, insbesondere als Maschinensteuerung ausgebildet sein. Vorzugsweise kann die Steuerungseinheit eine CPU, Speichereinheit, eine Ein- und Ausgabeeinheit, eine Schnittstelle zu Antrieben der Robotereinheit, eine Schnittstelle zu einem Antrieb des mobilen Wagens und/oder eine Netzwerkschnittstelle umfassen. Bei der Ein- und Ausgabeeinheit kann es sich beispielsweise um eine Tastatur und einen Bildschirm handeln. Denkbar ist, dass das Robotersystem mehrere Steuerungseinheiten umfasst, um die Robotereinheit, den mobilen Wagen und/oder die Andockstation getrennt voneinander zu steuern.

Bei den Rüst- und/oder Garniturteilen kann es sich um CIP-Kappen, Schutzkammerbleche, Füllrohre, Sonden, Ein-/Auslaufgarnituren, Sägezahnsterne, Führungen, Blasformen, Heizdorne, Abschirmplatten, Reckstangenspitzen, Blasdüsen, Verschließerkonen, Halteklammern, Flaschenteller und/oder Packmittel (z.B. Etikettenrollen) handeln.

Bei den Arbeitsaufträgen kann es sich beispielsweise um einen Wechsel oder eine Verstellung der Rüst- und/oder Garniturteile handeln. Bei den Arbeitsaufträgen kann es sich ganz allgemein um von der Robotereinheit verrichtete Tätigkeiten an der Behälterbehandlungsmaschine handeln.

Der mobile Wagen kann die Steuerungseinheit für die Robotereinheit und einen Schutz gegen Eindringen von Schmutz und flüssige Medien in die Steuerungseinheit umfassen. Dadurch kann die Steuerungseinheit außerhalb des Arbeitsbereich der Robotereinheit angeordnet und im mobilen Wagen dennoch mitgeführt werden. Zusätzlich ist die Steuerungseinheit vor Verschmutzungen geschützt. Der Schutz kann Gehäuseteile, ein Dichtsystem und/oder eine flexible Hülle umfassen. Bei dem Schutz kann es sich beispielsweise um ein gegen das Eindringen von Flüssigkeiten ausgelegtes Gehäuse handeln, insbesondere gemäß der Norm ISO 20653 nach Schutzart IP 5K1 bis IP5K6 oder IP 6K1 bis IP6K6.

Die Robotereinheit kann einen wechselbaren Endeffektor umfassen, so dass wahlweise verschiedenartige Endeffektoren mit der Robotereinheit kombinierbar sind, um die Arbeitsaufträge mit unterschiedlichen Rüst- und/oder Garniturteilen durchzuführen. Dadurch kann das Robotersystem besonders flexibel für die unterschiedlichsten Arbeitsaufträge eingesetzt werden und auch bei Bedarf ohne hohen Aufwand nachgerüstet werden. Beispielsweise kann die Robotereinheit eine Wechselkupplung für die verschiedenartigen Endeffektoren umfassen, die insbesondere automatisch von der Steuerungseinheit betätigbar ist. Dadurch kann die Robotereinheit den Endeffektor selbstständig und ohne Mitwirkung einer Bedienperson auf den Arbeitsauftrag anpassen.

Die Robotereinheit umfasst einen Kraft- und/oder Momenten-Sensor , der dazu ausgebildet ist, eine Kraft- und/oder ein Drehmoment auf eines der Rüst- und/oder Garniturteile bei der Durchführung einer der Arbeitsaufträge zu erfassen. Dadurch kann eine Beschädigung der Rüst- und/oder Garniturteile, der Behälterbehandlungsmaschine und/oder des Magazins bei der Durchführung des Arbeitsauftrags vermieden werden. Denkbar ist beispielsweise ein kraftgeführtes Fügen der Rüst- und/oder Garniturteile, ein kraftgeführtes Einsetzen/Entnehmen der Rüst- und/oder Garniturteile in/aus dem Magazin, eine Positionskorrektur über Soll-Ist-Vergleich von Kraft- bzw. Drehmomentverläufen und/oder Teachvorgänge mit Hilfe des Kraft- und/oder Momenten-Sensors.

Der mobile Wagen, ein davon separater Wagen, das Magazin und/oder die Andockstation kann eine Aufbewahrungseinheit für die verschiedenartigen Endeffektoren umfassen, insbesondere wobei die Aufbewahrungseinheit derart ausgeführt ist, dass die verschiedenartigen Endeffektoren mit der Robotereinheit automatisch wechselbar sind. Dadurch können die verschiedenartigen Endeffektoren magazinartig mit der Aufbewahrungseinheit bereitgestellt werden.

Der mobile Wagen kann als fahrerloses Transportfahrzeug mit einem Antrieb zur Fortbewegung in dem Arbeitsbereich ausgebildet sein. Der Antrieb kann Teil des bodengestützten Fahrwerks sein und eines der Räder antreiben. Als Antrieb kann das bodengestützte Fahrwerk einen Elektromotor umfassen, der vorzugsweise steuerbar ausgebildet ist. Beispielsweise kann es sich hierbei um einen Servomotor handeln. Denkbar ist auch, dass das bodengestütztes Fahrwerk einen Lenkantrieb umfasst, um wenigstens eines der Räder zu lenken. Zur Stromversorgung kann der mobile Wagen eine wieder aufladbare Batterie und/oder eine elektrische Schnittstelle umfassen. Die Robotereinheit kann einen Schutz gegen Eindringen von Schmutz und flüssige Medien umfassen. Dadurch ist die Robotereinheit vor eindringendem Schmutz bzw. vor aus der Behälterbehandlungsmaschine austretenden Flüssigkeiten geschützt. Der Schutz kann Gehäuseteile, ein Dichtsystem und/oder eine flexible Hülle umfassen. Bei dem Schutz kann es sich beispielsweise um ein gegen das Eindringen von Flüssigkeiten ausgelegtes Gehäuse der Robotereinheit mit einem Dichtsystem an den Gelenken handeln, insbesondere gemäß der Norm ISO 20653 nach Schutzart IP 5K1 bis IP5K6 oder IP 6K1 bis IP6K6. Ebenso ist denkbar, dass die Robotereinheit wenigstens teilweise in die flexible Hülle eingehüllt ist.

Die Andockstation kann eine Zentrierungseinrichtung und/oder eine Verriegelungseinrichtung für den mobilen Wagen umfassen, um den mobilen Wagen an einer Zielposition zu positionieren. Dadurch kann der mobile Wagen besonders wiederholgenau an der Zielposition positioniert und gegen ein Verschieben beim Betrieb der Robotereinheit gesichert werden. Bei der Zentrierungseinrichtung kann es sich um plane, zylindersegmentförmige und/oder kugelsegmentförmige Passflächen handeln. Bei der Zielposition kann es sich um eine Referenzposition an der Andockstation handeln. Die Verriegelungseinrichtung kann beispielsweise eine Klemmvorrichtung umfassen, um den mobilen Wagen an der Zielposition fest zu ziehen, beispielsweise mittels eines Schraubknaufs oder eines Hebels. Denkbar ist jedoch auch, dass die Verriegelungseinrichtung automatisch und/oder von der Steuerungseinheit gesteuert arbeitet.

Der mobile Wagen und/oder die Robotereinheit kann ein Kamerasystem und eine Bildverarbeitungseinheit umfassen, die dazu ausgebildet sind, zur Positionierung des mobilen Wagens eine Zielposition an der Andockstation zu erfassen und/oder die Rüst- und/oder Garniturteile zu identifizieren. Dadurch kann der mobile Wagen besonders flexibel positioniert werden, ohne dazu zwingend mechanische Elemente einzusetzen. Ebenso können die Rüst- und/oder Garniturteile mittels Bildverarbeitung identifiziert werden, so dass sie ohne feste Ordnung bereitgestellt werden können. Denkbar ist, dass die Rüst- und/oder Garniturteile optische Identifikationselemente umfassen, die mit dem Kamerasystem und der Bildverarbeitungseinheit erkennbar sind. Ebenso ist denkbar, dass das Robotersystem ein elektronisches Identifikationssystem für die Rüst- und/oder Garniturteile umfasst, beispielsweise einen RFID-Scanner und RFID-Kennzeichnungselemente an den Rüst- und/oder Garniturteilen.

Die Andockstation kann eine anhebbare Andockeinheit für den mobilen Wagen umfassen. Dadurch kann der mobile Wagen unabhängig von den Bodenbeschaffenheit zu einer definierten Zielposition angehoben werden. Die anhebbare Andockeinheit kann eine steuerbare Verfahreinheit umfassen, insbesondere um die Zentrierungseinrichtung zu verfahren und/oder um die Verriegelungseinrichtung zu betätigen. Denkbar ist auch, dass die anhebbare Andockeinheit einen Bedienmechanismus umfasst, der manuell betätigbar ist.

Die Andockstation kann eine trennbare Steckerverbindung mit einer Energie- und/oder Medienversorgung und/oder einer Datenschnittstelle für die Robotereinheit umfassen. Dadurch kann die Robotereinheit am mobilen Wagen im Bereich der Andockstation mit Energie und/oder Medien versorgt werden. Denkbar ist auch, dass über die Datenschnittstelle eine Datenverbindung zwischen der Robotereinheit und der Behälterbehandlungsmaschine aufbaubar ist, um die Robotereinheit bei der Durchführung der Arbeitsaufträge zu unterstützen oder anzusteuern. Die trennbare Steckverbindung kann manuell von einem Bediener, durch einen Andockvorgang oder automatisiert durch die Robotereinheit (Robotereinheit steckt die Steckverbindung selbst an) erfolgen.

Das Magazin kann , aber nicht erfindungsgemäß, zur Aufbewahrung der Rüst- und/oder Garniturteile am mobilen Wagen, an der Andockstation oder an der Behälterbehandlungsmaschine angeordnet sein. Dadurch können die Rüst- und/oder Garniturteile an einer besonders geeigneten Stelle bereitgestellt werden. Denkbar ist, dass der mobile Wagen das Magazin umfasst, so dass die Rüst- und/oder Garniturteile mitgeführt werden können. Folglich wird weniger permanente Stellfläche an der Behälterbehandlungsmaschine benötigt.

Erfindungsgemäß ist das Magazin zur Aufbewahrung der Rüst- und/oder Garniturteile als von dem mobilen Wagen separater Magazinwagen ausgebildet . Dadurch können verschiedenartige Rüst- und/oder Garniturteile in unterschiedlichen Magazinwägen bereitgestellt werden und flexibel für die Arbeitsaufträge mit dem mobilen Wagen und der Robotereinheit kombiniert werden. Der separate Magazinwagen kann ein bodengestütztes Fahrwerk umfassen, insbesondere mit einem eigenen Antrieb. Denkbar ist auch, dass der separate Magazinwagen mit dem mobilen Wagen der Robotereinheit koppelbar ausgebildet ist. Dadurch kann der separate Magazinwagen an den mobilen Wagen angehängt und gemeinsam transportiert werden.

Das Magazin kann ein oder mehrere Fächer und/oder Einzelaufnahmen zur Aufbewahrung der Rüst- und/oder Garniturteile umfassen. Dadurch können die Rüst- und/oder Garniturteile in geordneter Weise bereitgestellt werden. Denkbar ist auch, dass es sich bei den ein oder mehreren Fächern um Schubladen oder dergleichen handelt.

Denkbar ist auch, dass das Magazin eine Reinigungseinrichtung zur Reinigung der Rüst- und/oder Garniturteile umfasst. Dadurch können die Rüst- und/oder Garniturteile direkt nach dem Einsatz besonders einfach gereinigt werden. Beispielsweise kann es sich bei der Reinigungseinrichtung um eine Wanne oder ein Fach zur Aufnahme eines Reinigungsmediums handeln, insbesondere wobei daran Düsen zur Verteilung des Reinigungsmediums angeordnet sind. Zudem kann die Reinigungseinrichtung einen Ablauf und/oder einen Tank für das Reinigungsmedium umfassen. Das Robotersystem kann eine Schutzeinrichtung zum Schutz vor Verletzungen durch die Robotereinheit umfassen. Hierbei kann es sich um mechanische Elemente, wie beispielsweise einen Schutzzaun handeln. Ebenso ist denkbar, dass der Schutz einen Sicherheitsscanner, einen Lichtvorhang und/oder Trittmatten umfasst, um sich annähernde Personen zu erkennen. Dringt eine Person in eine oder mehrere vordefinierte Zonen ein, so werden von der Steuerungseinheit unmittelbar Sicherheitsmaßnahmen eingeleitet. Dringt beispielsweise eine Person in eine erste Zone ein, so reduziert die Robotereinheit ihre Geschwindigkeit. Dringt die Person noch näher in eine zweite Zone ein, so hält die Robotereinheit an, bis die zweite Zone von der Person wieder verlassen wird.

Weitere Merkmale und Vorteile der Erfindung werden nachfolgend anhand der in den Figuren dargestellten Ausführungsbeispiele näher erläutert. Dabei zeigt:
- Figuren 1A - 1B: ein Ausführungsbeispiel einer Behälterverarbeitungsanlage mit einer Behälterbehandlungsmaschine in einer Draufsicht bzw. einer seitlichen Schnittdarstellung;
- Figuren 2A - 2D: ein Ausführungsbeispiel eines Robotersystems beim Durchführen eines Arbeitsauftrags mit Rüst- und/oder Garniturteilen in der Behälterverarbeitungsanlage;
- Figuren 3A - 3B: ein weiteres Ausführungsbeispiel einer alternativen Andockstation mit einer anhebbaren Andockeinheit;
- Figur 4: ein weiteres Ausführungsbeispiel eines Robotersystems, bei dem das Magazin zur Aufbewahrung der Rüst- und/oder Garniturteile am mobilen Wagen angeordnet ist; und
- Figur 5: ein weiteres Ausführungsbeispiel eines Robotersystems, bei dem das Magazin zur Aufbewahrung der Rüst-und/oder Garniturteile als von dem mobilen Wagen separater Magazinwagen ausgebildet ist.

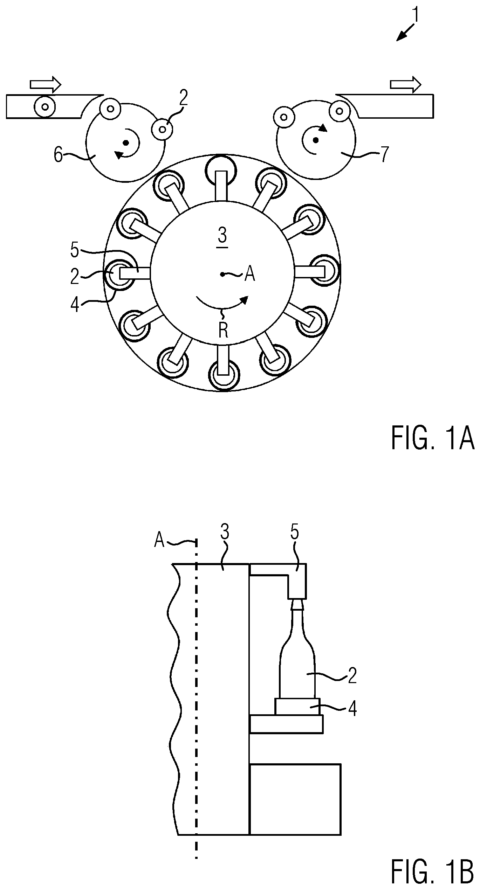

In den Figuren 1A - 1B ist ein Ausführungsbeispiel einer Behälterverarbeitungsanlage 1 mit einer Behälterbehandlungsmaschine 3 in einer Draufsicht bzw. in einer seitlichen Schnittdarstellung gezeigt. Zu sehen ist, dass die Behälterverarbeitungsanlage 1 einen Zuführstern 6, eine Behälterbehandlungsmaschine 3 und einen Auslaufstern 7 umfasst. Die Behälterbehandlungsmaschine 3 ist hier lediglich beispielhaft als Füller ausgebildet. Denkbar ist jedoch auch, dass die Behälterbehandlungsanlage 1 eine andere oder weitere Behälterbehandlungsmaschinen umfasst, wie beispielsweise eine Behälterherstellungsmaschine, einen Rinser, eine Inspektionsvorrichtung, eine Etikettiermaschine, einen Verschließer, eine Verpackungsmaschine und/oder einen Palettierer.

Die Behälter 2 werden zunächst vom Zuführstern 6 an das Karussell der Behälterbehandlungsmaschine 3 übergeben, das sich um die vertikaler Achse A in der Richtung R dreht. Die Behälterbehandlungsmaschine 3 ist am Karussell mit mehreren Behälteraufnahmen 4 ausgebildet, um die Behälter 2 beim Transport sicher aufzunehmen und mit den Füllorgan 5 währenddessen mit einem flüssigen Produkt zu befüllen. Beispielsweise kann es sich dabei um ein Getränk handeln.

Üblicherweise muss die Behälterbehandlungsmaschine 3 beim Wechsel auf ein anderes Produkt oder auch in regelmäßigen Zyklen gereinigt werden. Dies erfolgt üblicherweise nach dem CIP-Verfahren (Clean In Place), so dass die Füllorgan 5 dazu nicht demontiert, sondern lediglich mit CIP-Kappen versehen werden müssen. Dies wird anhand der nachfolgenden Figuren unter Einsatz eines Robotersystems näher erläutert:

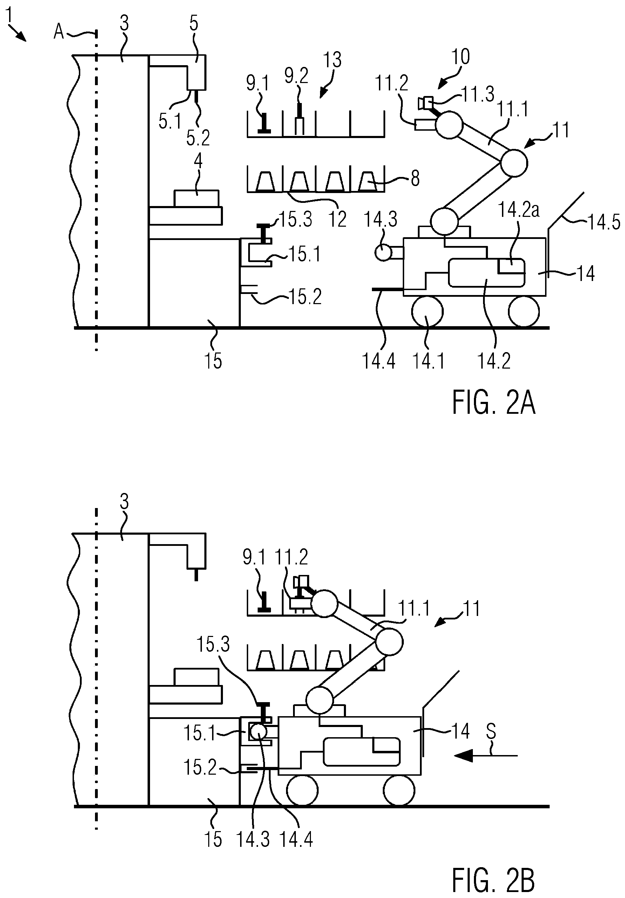

In den Figuren 2A - 2D ist ein Ausführungsbeispiel eines Robotersystems 10 beim Durchführen eines Arbeitsauftrags mit den Rüst- und/oder Garniturteilen 8 in der Behälterverarbeitungsanlage 1 dargestellt. Dabei handelt es sich um die zuvor erwähnten CIP-Kappen, die über das Füllventil 5.1 und das Rückgasrohr 5.2 des Füllorgans 5 aufgesetzt werden, um einen Spülraum für ein Reinigungsmedium zu schaffen.

In der Figur 2A ist das Robotersystem 10 schematisch dargestellt: Es umfasst den mobilen Wagen 14 und die daran angeordnete Robotereinheit 11 zur Durchführung der Arbeitsaufträge mit den Rüst- und/oder Garniturteilen 8 in der Behälterverarbeitungsanlage 1. Zu dem umfasst es die Andockstation 15, um den mobilen Wagen 14 an der Behälterbehandlungsmaschine 3 sicher anzudocken.

Weiterhin ist zur Aufbewahrung der Rüst- und/oder Garniturteile 8 das Magazin 12 mit mehreren Fächern oder Einzelaufnahmen vorgesehen, aus dem die Rüst- und/oder Garniturteile 8 von der Robotereinheit 11 selbstständig herausgenommen und an der Behälterbehandlungsmaschine angebracht werden können.

Zu sehen ist auch, dass verschiedenartige Endeffektoren 9.1, 9.2 in der Aufbewahrungseinheit 13 bereitgestellt werden, die beispielsweise im Bereich des Magazins 12 angeordnet oder ein Teil davon ist.

Im Detail ist die Robotereinheit 11 mit einem Roboterarm 11.1 ausgebildet, der an einem festen Ende am mobilen Wagen 14 montiert und dessen anderes Ende über mehrere Gelenke in verschiedenen Richtungen bewegbar ist. Anders ausgedrückt ist die Robotereinheit 10 als Knickarmroboter ausgebildet. Am bewegbaren Ende befindet sich die Wechselkupplung 11.2, über die wahlweise die verschiedenartigen Endeffektoren 9.1, 9.2 mit der Robotereinheit 11 kombinierbar sind, um die Arbeitsaufträge mit unterschiedlichen Rüst- und/oder Garniturteilen 8 durchzuführen.

Das feste Ende des Roboterarms 11.1 ist an einer Oberseite des mobilen Wagens 14 befestigt. Zudem umfasst der mobile Wagen 14 das bodengestütztes Fahrwerk 14.1 mit Rädern und die Griffstange 14.5, so das eine Bedienperson den mobilen Wagen 14 bequem im Arbeitsbereich der Behälterverarbeitungsanlage 1 verfahren kann. Denkbar ist, dass wenigstens ein Teil der Räder des bodengestützten Fahrwerks 14.1 zum Lenken um eine vertikale Achse schwenkbar ausgebildet sind. Ebenso denkbar, dass der mobile Wagen 14 als fahrerloses Transportfahrzeug mit einem eigenen Antrieb zur Fortbewegung in dem Arbeitsbereich ausgebildet ist. Dadurch können der mobile Wagen 14 und die darauf angeordnete Robotereinheit 11 automatisch von einer übergeordneten Prozesssteuerung zur Behälterbehandlungsmaschine 3 und weiteren hier nicht dargestellten Behälterbehandlungsmaschinen verfahren werden.

Weiter ist zu sehen, dass der mobile Wagen 14 die Steuerungseinheit 14.2 für die Robotereinheit 11 umfasst, die in einem Schutz gegen Eindringen von Schmutz und flüssige Medien eingehaust ist. Beispielsweise kann es sich dabei um ein staub- und/oder flüssigkeitsdichtes Gehäuse handeln. Die Steuerungseinheit 14.2 ist mit der Robotereinheit 11 beispielsweise über ein Kabel verbunden, über das die Steuersignale geleitet werden können.

Hier nicht im Detail dargestellt ist, dass die Robotereinheit 11 einen Schutz gegen Eindringen von Schmutz und flüssige Medien umfasst. Beispielsweise kann es sich dabei um ein Dichtsystem handeln, mit dem ein Eindringen in die Gelenke verhindert wird. Ebenso ist denkbar, dass es sich um eine flexible Hülle handelt, mit der der Roboterarm 11.1 umhüllt ist. Dadurch wird die Robotereinheit 11 vor Flüssigkeiten und Schmutz aus der Behälterbehandlungsmaschine 3 geschützt.

Zu sehen ist weiter, dass die Robotereinheit 11 ein Kamerasystem 11.3 und der mobile Wagen 14 eine Bildverarbeitungseinheit 14.2a umfassen. Diese sind über ein Datenkabel für Bilddaten miteinander verbunden. Es versteht sich, dass die Bildverarbeitungseinheit 14.2a auch direkt an der Robotereinheit 11 oder an jedem geeigneten Platz angeordnet sein kann. Dadurch ist es möglich, die Rüst- und/oder Garniturteile 8 zu identifizieren und abhängig davon aus dem Magazin 12 herauszunehmen. Denkbar ist auch, dass das Kamerasystem 11.3 und die Bildverarbeitungseinheit 14.2a dazu ausgebildet sind, eine Zielposition für den mobilen Wagen 14 an der Andockstation 15 zu erfassen und dadurch die Positionierung zu unterstützen.

Im Falle des vorliegenden Ausführungsbeispiels umfasst die Andockstation 15 jedoch die Zentrierungseinrichtung 15.1 und die Verriegelungseinrichtung 15.3, um den mobilen Wagen 14 an der Zielposition wiederholgenau zu positionieren. Dies wird anhand der Figur 2B näher erläutert:
Die Bedienperson schiebt den mobilen Wagen 14 mit der darauf angeordneten Robotereinheit 11 in der Richtung S bis zu der Andockstation 15, so dass das am mobilen Wagen 14 angeordnete Zentrierungselement 14.3 an entsprechenden Passflächen der Zentrierungseinrichtung 15.1 anliegt. Dadurch ist eine wiederholgenau Positionierung an der Zielposition sichergestellt. Anschließend wird der mobile Wagen 14 dort mit der Verriegelungseinrichtung 15.3 verriegelt und gegen ein weiteres Verschieben gesichert.

Zu sehen ist auch, dass die Andockstation die trennbare Steckerverbindung 15.2 mit einer Energieversorgung und einer Datenschnittstelle für die Robotereinheit 11 umfasst, die beim Andocken mit einem entsprechenden Stecker 14.4 elektrisch verbunden wird. Dadurch kann die Robotereinheit 11 während der Durchführung eines der Arbeitsaufträge mit der notwendigen Energie versorgt und mit der Behälterbehandlungsmaschine 3 durch den Austausch von Steuerungsdaten synchronisiert werden.

An der Zielposition erfolgt zunächst das Aufnehmen des Endeffektors 9.1 mit der Wechselkupplung 11.2 des Roboterarms 11.1. Dazu wird das verfahrbare Ende des Roboterarms 11 zur Aufbewahrungseinheit 13 so verfahren, dass der gewünschte Endeffektor 9.1 mit der Wechselkupplung 11.2 verbunden werden kann. Die Wechselkupplung 11.2 kann derart ausgebildet sein, dass der Endeffektor 9.1 automatisch und/oder gesteuert angekoppelt werden kann.

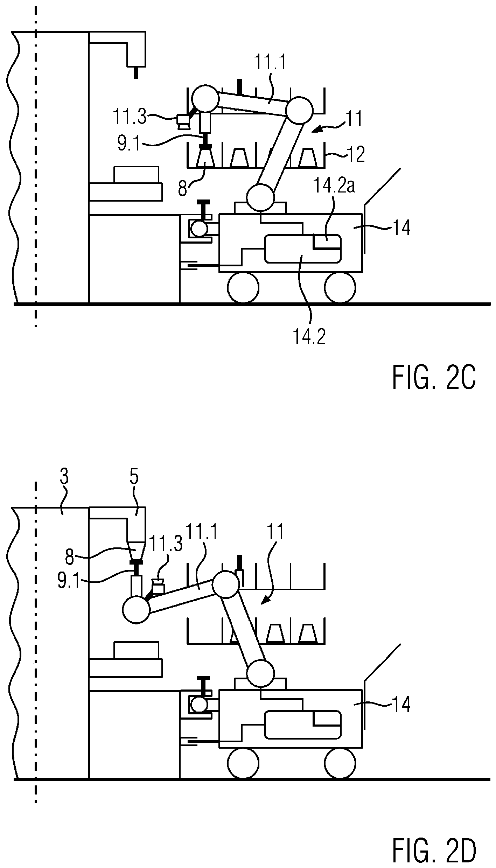

In der Figur 2C ist zu sehen, dass nun mittels des Kamerasystems 11.3 und der Bildverarbeitungseinheit 14.2a die Rüst- und/oder Garniturteile 8 automatisch erkannt werden und der Roboterarm 11.1 zum entsprechenden Fach des Magazins 12 hin verfahren werden kann. Dort wird dann das entsprechende Rüst- und/oder Garniturteil 8 aufgenommen, in diesem Fall eine CIP-Kappe, und an der Behälterbehandlungsmaschine 3 angebracht.

Dieser Vorgang ist in der Figur 2D zu sehen, wobei das verfahrbare Ende des Roboterarms 11 derart zum Füllorgan 5 der Behälterbehandlungsmaschine 3 verfahren wird, dass die CIP-Kappe 8 mit dem Endeffektor 9.1 von unten her am Füllorgan 5 angebracht wird, so dass sie einen Spülraum für ein Reinigungsmedium bildet. Dieser Vorgang wird für alle Füllorgane 5 der Behälterbehandlungsmaschine 3 wiederholt, sodass schlussendlich alle Füllorgane 5 mit CIP-Kappen ausgestattet sind. Anschließend erfolgt die CIP-Reinigung mit dem Reinigungsmedium.

Denkbar ist auch, dass nach erfolgter CIP-Reinigung alle zuvor aufgebrachten Rüst- und/oder Garniturteile 8 wieder mit der Robotereinheit 11 entfernt werden. Möglich ist auch, dass die Robotereinheit 11 mit dem mobilen Wagen 14 während der Reinigung zu einer anderen Behälterbehandlungsmaschine (hier nicht dargestellt) verfahren und so besonders gut genutzt wird.

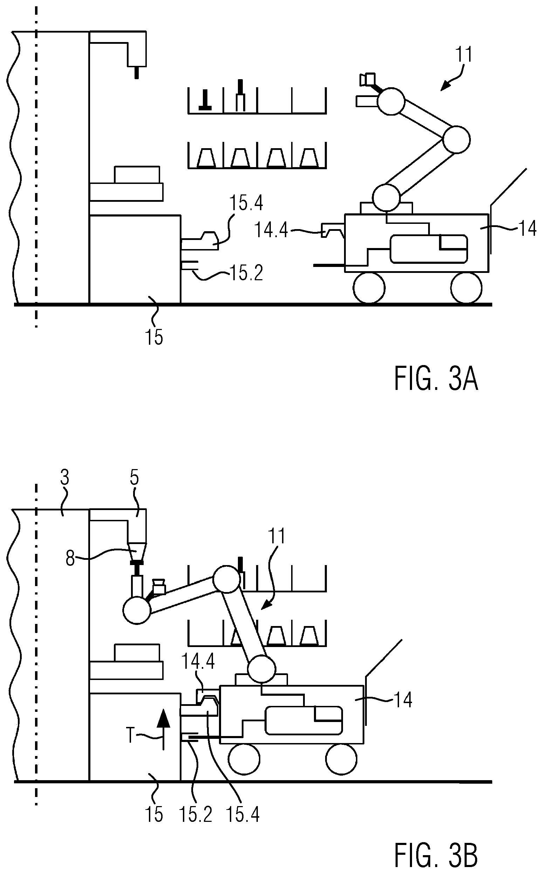

In den Figuren 3A - 3B ist ein weiteres Ausführungsbeispiel einer alternativen Andockstation 15 mit einer anhebbaren Andockeinheit 15.4 dargestellt. Das Ausführungsbeispiel unterscheidet sich von dem zuvor beschriebenen Ausführungsbeispiel lediglich durch den Andockmechanismus des mobilen Wagens 14 an der Andockstation 15. Alle übrigen Merkmale des Ausführungsbeispiels aus den Figuren 2A - 2B gelten entsprechend.

Zu sehen ist, dass die Andockstation 15 die anhebbare Andockeinheit 15.4 für den mobilen Wagen 14 umfasst. Beim Andocken wird ein am mobilen Wagen 14 angeordnetes Kupplungsstück 14.4 im Bereich der anhebbaren Andockeinheit 15.4 positioniert. Anschließend wird die Andockeinheit 15.4 angehoben, sodass der gesamte mobile Wagen 14 mit der darauf angeordneten Robotereinheit 11 nach oben verfahren wird. Dadurch ergibt sich eine einfache und genaue Positionierung an der Zielposition, die unabhängig von Bodenunebenheiten ist.

Denkbar ist, dass die Andockeinheit 15.4 einen Antrieb umfasst, sodass sie automatisch angehoben werden kann. Ebenso ist denkbar, dass sie über einen Bedienmechanismus manuell angehoben wird. Möglich ist auch, dass die Steckverbindung 15.2 für die Energieversorgung und die Datenschnittstelle beim Anheben ebenfalls mitverfahren wird, so dass eine mechanisch sichere Verbindung entsteht.

Wie in der Figur 3 B zu sehen ist, kann mit der Robotereinheit 11 anschließend das Rüst- und/oder Garniturteil 8 (CIP-Kappe) am Füllorgan 5 angebracht werden.

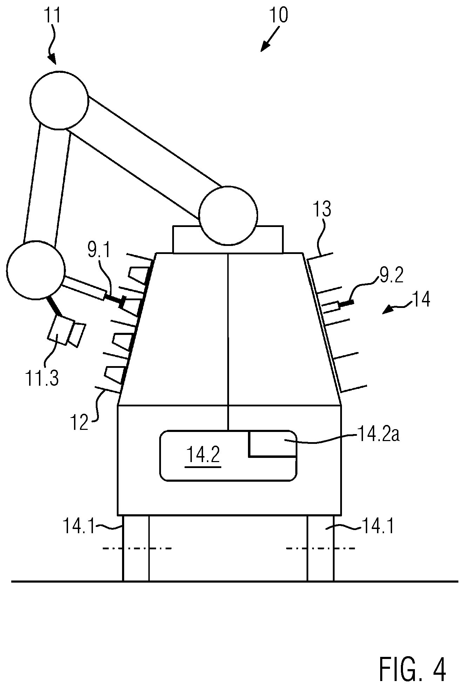

In der Figur 4 ist ein weiteres Ausführungsbeispiel eines Robotersystems 10 gezeigt, bei dem das Magazin 12 zur Aufbewahrung der Rüst- und/oder Garniturteile 8 am mobilen Wagen 14 angeordnet ist. Das Ausführungsbeispiel der Figur 4 unterscheidet sich von den zuvor beschriebenen Ausführungsbeispielen lediglich durch die Anordnung des Magazins 12 und der Aufbewahrungseinheit 13 am mobilen Wagen 14. Alle zuvor beschriebenen Merkmale gelten entsprechend.

Zu sehen ist, dass sich hier das Magazin 12 und die Aufbewahrungseinheit 13 am oberen Bereich des mobilen Wagens 14 befindet. Von dort können mit der Robotereinheit 11 sowohl die verschiedenartigen Endeffektoren 9.1, 9.2 gewechselt als auch die Rüst- und/oder Garniturteile 8 aufgenommen oder abgelegt werden. Dabei können zur Unterstützung auch das Kamerasystem 11.3 und die Bildverarbeitungseinheit 14.2a eingesetzt werden, so dass die Positionen der Rüst-und/oder Garniturteile 8 bzw. der Endeffektoren 9.1, 9.2 automatisch erfasst werden.

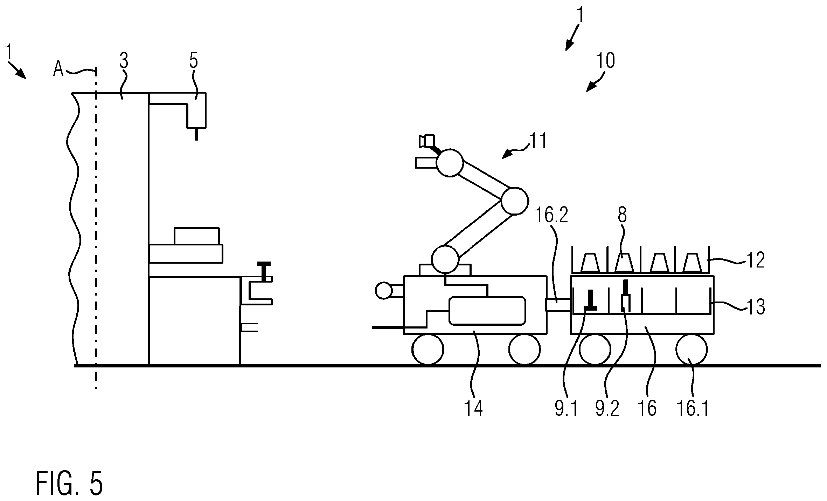

In der Figur 5 ist ein weiteres Ausführungsbeispiel eines Robotersystems 10 zu sehen, bei dem das Magazin 12 für die Rüst- und/oder Garniturteile 8 als von dem mobilen Wagen 14 separater Magazinwagen 16 ausgebildet ist. Zuvor in Bezug auf die anderen Ausführungsbeispiele beschriebene Merkmale gelten entsprechend. Zu sehen ist, dass der separater Magazinwagen 16 ebenfalls ein bodengestütztes Fahrwerk 16.1 mit Rädern und einer Kupplung 16.2 zur Verbindung mit dem mobilen Fahrwagen 14 umfasst. Dadurch kann das Magazin 12 mit dem mobilen Wagen 14 und der Robotereinheit 11 abhängig vom Arbeitsauftrag flexibel kombiniert und verfahren werden. Zudem ist zu sehen, dass auch die Aufbewahrungseinheit 13 mit den verschiedenartigen Endeffektoren 9.1, 9.2 am Magazinwagen 16 angeordnet ist. Dadurch können die für die jeweiligen Rüst- und/oder Garniturteile 8 geeigneten Endeffektoren 9.1, 9.2 mitgeführt werden.

Die in den Ausführungsbeispielen beschriebenen Robotersysteme 10 werden wie folgt eingesetzt: Zunächst wird der mobile Wagen 14 mit der darauf angeordneten Robotereinheit 11 manuell von einer Bedienperson oder automatisch mit einem Antrieb zu der Behälterbehandlungsmaschine 3 der Behälterverarbeitungsanlage 1 verfahren und dort an der Andockstation 15 angedockt. Anschließend wird mit der Robotereinheit 11 ein Arbeitsauftrag mit den Rüst-und/oder Garniturteilen 8 durchgeführt. Beispielsweise werden dabei mit der Robotereinheit 11 sogenannte CIP-Kappen aus dem Magazin 12 entnommen und auf Füllorgane 5 aufgesetzt. Nach der CIP-Reinigung ist denkbar, dass die CIP-Kappen mit der Robotereinheit 11 wieder ins Magazin 12 zurückgelegt werden.

Denkbar ist auch, dass abhängig vom Arbeitsauftrag einer der verschiedenartigen Endeffektoren 9.1, 9.2 aus der Aufbewahrungseinheit 13 entnommen und mit der Wechselkupplung 11.2 der Robotereinheit 10 verbunden wird.

Dadurch, dass bei den Ausführungsbeispielen in den Fig. 1A - 5 die Robotereinheit 11 an dem mobilen Wagen 14 angeordnet ist, der das bodengestütztes Fahrwerk 14.1 zur Fortbewegung in dem Arbeitsbereich der Behälterverarbeitungsanlage 1 umfasst, kann sie manuell oder automatisch zu derjenigen Behälterbehandlungsmaschine 3 der Behälterverarbeitungsanlage 1 verfahren werden, an der gerade ein Arbeitsauftrag mit den Rüst-und/oder Garniturteilen 8 durchzuführen ist. Anschließend kann sie zu einer anderen Behälterbehandlungsmaschine verfahren werden, an der ein weiterer Arbeitsauftrag mit Rüst- und/oder Garniturteilen 8 durchzuführen ist. Folglich ist die Robotereinheit 11 aufgrund ihrer Anordnung am mobilen Wagen 14 besonders flexibel einsetzbar und kann besser ausgelastet werden. Dadurch, dass das Robotersystem 10 die Andockstation 15 zum Andocken des mobilen Wagens 14 an der Behälterbehandlungsmaschine 3 umfasst, kann es mit dem mobilen Wagen 14 sicher an einer definierten Zielposition angedockt werden. Folglich ist der mobile Wagen 14 bei der Durchführung der Arbeitsaufträge gegen ein Verschieben durch von der Robotereinheit 11 übertragene Kräfte gesichert.

## Patentansprüche

1. Robotersystem (10) für eine Behälterverarbeitungsanlage (1), mit einer Robotereinheit (11) zur Durchführung von Arbeitsaufträgen mit Rüst- und/oder Garniturteilen (8) in der Behälterverarbeitungsanlage (1), und
mit einem Magazin (12) zur Aufbewahrung der Rüst- und/oder Garniturteile (8), wobei
die Robotereinheit (11) an einem mobilen Wagen (14) angeordnet ist, der ein bodengestütztes Fahrwerk (14.1) zur Fortbewegung in einem Arbeitsbereich der Behälterverarbeitungsanlage (1) umfasst, und
dass das Robotersystem (11) eine Andockstation (15) zum Andocken des mobilen Wagens (14) an einer Behälterbehandlungsmaschine (3) der Behälterverarbeitungsanlage (1) umfasst,
**dadurch gekennzeichnet, dass**
das Magazin (12) zur Aufbewahrung der Rüst- und/oder Garniturteile (8) als von dem mobilen Wagen (14) separater Magazinwagen (15) ausgebildet ist,
wobei die Robotereinheit (11) einen Kraft- und/oder Momenten-Sensor umfasst, der dazu ausgebildet ist, eine Kraft und/oder ein Drehmoment auf eines der Rüst- und/oder Garniturteile (8) bei der Durchführung einer der Arbeitsaufträge zu erfassen.

2. Robotersystem (10) nach Anspruch 1, wobei der mobile Wagen (14) eine Steuerungseinheit (14.2) für die Robotereinheit (11) und einen Schutz gegen Eindringen von Schmutz und flüssige Medien in die Steuerungseinheit umfasst.

3. Robotersystem (10) nach Anspruch 1 oder 2, wobei die Robotereinheit (11) einen wechselbaren Endeffektor (9.1) umfasst, so dass wahlweise verschiedenartige Endeffektoren (9.1, 9.2) mit der Robotereinheit (11) kombinierbar sind, um die Arbeitsaufträge mit unterschiedlichen Rüst- und/oder Garniturteilen (8) durchzuführen.

4. Robotersystem (10) nach Anspruch 3, wobei der mobile Wagen (14), ein davon separater Wagen, das Magazin (12) und/oder die Andockstation (15) eine Aufbewahrungseinheit (13) für die verschiedenartigen Endeffektoren (9.1, 9.2) umfasst, insbesondere wobei die Aufbewahrungseinheit (13) derart ausgeführt ist, dass die verschiedenartigen Endeffektoren (9.1 , 9.2) mit der Robotereinheit (11) automatisch wechselbar sind.

5. Robotersystem (10) nach einem der vorangegangenen Ansprüche, wobei der mobile Wagen (14) als fahrerloses Transportfahrzeug mit einem Antrieb zur Fortbewegung in dem Arbeitsbereich ausgebildet ist.

6. Robotersystem (10) nach einem der vorangegangenen Ansprüche, wobei die Robotereinheit (11) einen Schutz gegen Eindringen von Schmutz und flüssige Medien umfasst.

7. Robotersystem (10) nach einem der vorangegangenen Ansprüche, wobei die Andockstation (15) eine Zentrierungseinrichtung (15.1) und/oder eine Verriegelungseinrichtung (15.3) für den mobilen Wagen (14) umfasst, um den mobilen Wagen (14) an einer Zielposition zu positionieren.

8. Robotersystem (10) nach einem der vorangegangenen Ansprüche, wobei der mobile Wagen (14) und/oder die Robotereinheit (11) ein Kamerasystem (11.3) und eine Bildverarbeitungseinheit (14.2a) umfasst, die dazu ausgebildet sind, zur Positionierung des mobilen Wagens (14) eine Zielposition an der Andockstation (15) zu erfassen und/oder die Rüst-und/oder Garniturteile (8) zu identifizieren.

9. Robotersystem (10) nach einem der vorangegangenen Ansprüche, wobei die Andockstation (15) eine anhebbare Andockeinheit (15.4) für den mobilen Wagen (14) umfasst.

10. Robotersystem (10) nach einem der vorangegangenen Ansprüche, wobei die Andockstation eine trennbare Steckerverbindung (15.2) mit einer Energie- und/oder Medienversorgung und/oder einer Datenschnittstelle für die Robotereinheit (11) umfasst.

11. Robotersystem (10) nach einem der vorangegangenen Ansprüche, wobei das Magazin (12) zur Aufbewahrung der Rüst- und/oder Garniturteile (8) am mobilen Wagen (14), an der Andockstation (15) oder an der Behälterbehandlungsmaschine (3) angeordnet ist.

12. Robotersystem (10) nach einem der vorangegangenen Ansprüche, wobei das Magazin (12) ein oder mehrere Fächer und/oder Einzelaufnahmen zur Aufbewahrung der Rüst-und/oder Garniturteile (8) umfasst.

13. Robotersystem (10) nach einem der vorangegangenen Ansprüche, wobei das Magazin (12) eine Reinigungseinrichtung zur Reinigung der Rüst- und/oder Garniturteile umfasst.

14. Robotersystem (10) nach einem der vorangegangenen Ansprüche, wobei das Robotersystem (10) eine Schutzeinrichtung zum Schutz vor Verletzungen durch die Robotereinheit umfasst.

## Claims

1. A robot system (10) for a container processing plant (1) comprising a robot unit (11) for performing processing jobs with handling and/or equipment parts (8) in the container processing plant (1), and
a magazine (12) for storing the handling and/or equipment parts (8),
wherein the robot unit (11) is disposed on a mobile carriage (14) comprising a ground-based chassis (14.1) for moving within a working area of the container processing plant (1), and
the robot system (11) comprises a docking station (15) for docking the mobile carriage (14) at a container processing machine (3) of the container processing plant (1), **characterized in that** the magazine (12) for storing of the handling and/or equipment parts (8) is configured as a magazine carriage (15) separate from the mobile carriage (14),
wherein the robot unit (11) comprises a force and/or moment sensor, configured to detect a force and/or torsional moment acting on one of the handling and/or equipment parts (8) while performing one of the processing jobs.

2. The robot system (10) according to claim 1, wherein the mobile carriage (14) comprises a control unit (14.2) for the robot unit (11) and a guard against the ingress of dirt and liquid materials into the control unit.

3. The robot system (10) according to claims 1 or 2, wherein the robot unit (11) comprises an exchangeable end effector (9.1) so that optionally different end effectors (9.1, 9.2) can be combined with the robot unit (11) for performing processing jobs with different handling and/or equipment parts (8).

4. The robot system (10) according to claim 3, wherein the mobile carriage (14), a carriage separate therefrom, the magazine (12) and/or the docking station (15) comprise a storage unit (13) for the different end effectors (9.1, 9.2) wherein in particular the storage unit (13) is configured such that the different end effectors (9.1, 9.2) can be automatically exchanged with the robot unit (11).

5. The robot system (10) according to any one of the preceding claims, wherein the mobile carriage (14) is configured as an Automated Guided Vehicle moving within the working area.

6. The robot system (10) according to any one of the preceding claims, wherein the robot unit (11) comprises a guard against the ingress of dirt and liquid materials.

7. The robot system (10) according to any one of the preceding claims, wherein the docking station (15) comprises a centring device (15.1) and/or a locking device (15.3) for the mobile carriage (14) for positioning the mobile carriage (14) at a target position.

8. The robot system (10) according to any one of the preceding claims, wherein the mobile carriage (14) and/or the robot unit (11) comprise a camera system (11.3) and an image processing unit (14.2a) configured to identify a target position at a docking station (15) and/or the handling and/or equipment parts (8) for positioning the mobile carriage (14).

9. The robot system (10) according to any one of the preceding claims, wherein the docking station (15) comprises a raisable docking unit (15.4) for the mobile carriage (14).

10. The robot system (10) according to any one of the preceding claims, wherein the docking station comprises a separable plug connection (15.2) with a power and/or media supply and/or a data interface for the robot unit (11).

11. The robot system (10) according to any one of the preceding claims, wherein the magazine (12) for storing the handling and/or equipment parts (8) is disposed on the mobile carriage (14), the docking station (15) or the container treatment machine (3).

12. The robot system (10) according to any one of the preceding claims, wherein the magazine (12) comprises one or more compartments and/or individual receptacles for storing the handling and/or equipment parts (8).

13. The robot system (10) according to any one of the preceding claims, wherein the magazine (12) comprises a cleaning device for cleaning the handling and/or equipment parts.

14. The robot system (10) according to any one of the preceding claims, wherein the robot system (10) comprises a guard for protecting against injuries by the robot unit.

## Revendications

1. Système robotique (10) pour une installation de traitement de récipients (1), comprenant une unité robotique (11) pour effectuer des commandes de travail avec des pièces d'équipement et/ou de garniture (8) dans l'installation de traitement de récipients (1), et comprenant un magasin (12) pour stocker les pièces d'équipement et/ou de garniture (8),
dans lequel l'unité robotique (11) est agencée sur un chariot mobile (14) qui comprend un châssis (14.1) basé au sol pour se déplacer dans une zone de travail de l'installation de traitement de récipients (1), et en ce que le système robotique (11) comprend un poste d'arrimage (15) pour arrimer le chariot mobile (14) sur une machine de traitement de récipients (3) de l'installation de traitement de récipients (1),
**caractérisé en ce que**
le magasin (12) pour le stockage des pièces d'équipement et/ou de garniture (8) est conçu sous la forme d'un chariot magasin (15) séparé du chariot mobile (14), dans lequel l'unité robotique (11) comprend un capteur de force et/ou de couple qui est conçu pour détecter une force et/ou un couple sur l'une des pièces d'équipement et/ou de garniture (8) lors de l'exécution de l'une des commandes de travail.

2. Système robotique (10) selon la revendication 1, dans lequel le chariot mobile (14) comprend une unité de commande (14.2) pour l'unité robotique (11) et une protection contre la pénétration de saletés et de fluides dans l'unité de commande.

3. Système robotique (10) selon la revendication 1 ou 2, dans lequel l'unité robotique (11) comprend un effecteur d'extrémité (9.1) interchangeable, de sorte que différents effecteurs d'extrémité (9.1, 9.2) peuvent être combinés au choix avec l'unité robotique (11) afin d'exécuter les commandes de travail avec différentes pièces d'équipement et/ou de garniture (8).

4. Système robotique (10) selon la revendication 3, dans lequel le chariot mobile (14), un chariot séparé de celui-ci, le magasin (12) et/ou le poste d'arrimage (15) comprennent une unité de stockage (13) pour les différents effecteurs terminaux (9.1, 9.2), en particulier dans lequel l'unité de stockage (13) est conçue de manière à ce que les différents effecteurs terminaux (9.1, 9.2) puissent être échangés automatiquement avec l'unité robotique (11).

5. Système robotique (10) selon l'une quelconque des revendications précédentes, dans lequel le chariot mobile (14) est conçu sous la forme d'un véhicule de transport sans conducteur avec un entraînement pour se déplacer dans la zone de travail.

6. Système robotique (10) selon l'une quelconque des revendications précédentes, dans lequel l'unité robotique (11) comprend une protection contre la pénétration de saletés et de fluides.

7. Système robotique (10) selon l'une quelconque des revendications précédentes, dans lequel le poste d'arrimage (15) comprend un dispositif de centrage (15.1) et/ou un dispositif de verrouillage (15.3) pour le chariot mobile (14) afin de positionner le chariot mobile (14) dans une position cible.

8. Système robotique (10) selon l'une quelconque des revendications précédentes, dans lequel le chariot mobile (14) et/ou l'unité robotique (11) comprennent un système de caméra (11.3) et une unité de traitement d'image (14.2a) qui sont conçus pour détecter une position cible sur le poste d'arrimage (15) et/ou pour identifier les pièces d'équipement et/ou de garniture (8) afin de positionner le chariot mobile (14).

9. Système robotique (10) selon l'une quelconque des revendications précédentes, dans lequel le poste d'arrimage (15) comprend une unité d'arrimage (15.4) pouvant être soulevée pour le chariot mobile (14).

10. Système robotique (10) selon l'une quelconque des revendications précédentes, dans lequel le poste d'arrimage comprend une connexion à fiche séparable (15.2) avec une alimentation en énergie et/ou en milieu fluide et/ou une interface de données pour l'unité robotique (11).

11. Système robotique (10) selon l'une quelconque des revendications précédentes, dans lequel le magasin (12) est agencé sur le chariot mobile (14), sur le poste d'arrimage (15) ou sur la machine de traitement de récipients (3) pour stocker les pièces d'équipement et/ou de garniture (8).

12. Système robotique (10) selon l'une quelconque des revendications précédentes, dans lequel le magasin (12) comprend un ou plusieurs compartiments et/ou supports individuels pour stocker les pièces d'équipement et/ou de garniture (8).

13. Système robotique (10) selon l'une quelconque des revendications précédentes, dans lequel le magasin (12) comprend un dispositif de nettoyage pour nettoyer les pièces d'équipement et/ou de garniture.

14. Système robotique (10) selon l'une quelconque des revendications précédentes, dans lequel le système robotique (10) comprend un dispositif de protection pour une protection contre des blessures par l'unité robotique.
